# EUROPÄISCHE PATENTSCHRIFT

(11) **EP 0 832 808 B1**
(45) Veröffentlichungstag und Bekanntmachung des Hinweises auf die Patenterteilung: **10.05.2000**
(21) Anmeldenummer: 97116344.9
(22) Anmeldetag: 19.09.1997
(51) Int. Cl.: B62D 1/18

(54) **Klemmvorrichtung für eine Lenksäule**
Locking device for a steering column
Dispositif de blocage en position pour une colonne de direction

(30) Priorität: 30.09.1996 DE 19640196
(43) Veröffentlichungstag der Anmeldung: 01.04.1998
(73) Patentinhaber: DaimlerChrysler AG, 70567 Stuttgart (DE)
(72) Erfinder: Weiss, Jürgen, 91074 Herzogenaurach (DE); Soyka, Wilfried, 91074 Herzogenaurach (DE); Martin, Reiner, 96178 Pommersfelden (DE); Zernickel, Alexander, 91074 Herzogenaurach (DE); Gaertner, Stephan, 22589 Hamburg (DE); Kambies, Thomas, 21224 Rosengarten (DE); Siemers, Michael, 22955 Hoisdorf (DE); Scheu, Reiner, 72584 Hülben (DE)

(56) Entgegenhaltungen:
- EP-A- 0 592 278
- EP-A- 0 600 700
- DE-U- 9 300 387
- FR-A- 2 696 403

## Beschreibung

Die Erfindung betrifft eine Klemmvorrichtung zur Lagefixierung einer in ihrer Länge- und/oder Neigung verstellbaren Fahrzeuglenksäule, die in Tragarmen einer ortsfesten Konsole geführt ist und einen Zugbolzen umfaßt, der rechtwinklig zu der Lenksäule angeordnet ist und der sich zwischen beiden Tragarmen erstreckt, wobei ein Ende des Zugbolzens an dem einen Tragarm gehalten ist und wobei an seinem gegenüberliegenden, axial über den anderen Tragarm vorstehenden Ende zwischen einer Axialscheibe und dem Tragarm auf dem Zugbolzen eine Klemmrampen aufweisende Klemmscheibe angeordnet ist, an der Klemmkörper abgestützt sind, die in einer drehbar auf dem Zugbolzen angeordneten Haltescheibe geführt sind, welche mittels eines manuell betätigbaren Handhebels verdrehbar ist, wobei sich abhängig von einer Drehrichtung der Haltescheibe die Tragarme zur Klemmung der Lenksäule annähern und zum Lösen von der Lenksäule entfernen.

Zur Verbesserung des Fahrkomforts und einer individuellen Anpassung der Lenkradposition an die Erfordernisse der Person des Fahrzeuglenkers dienen Klemmvorrichtungen für Lenksäulen, mit denen die Lenksäule in der Neigung verstellt werden kann sowie eine Längenverstellung, d. h. die Beabstandung zwischen der Bedienungsperson und dem Lenkrad, einstellbar ist.
Weiterhin sind Klemmvorrichtungen zur Einstellung der Neigung und einer Höhenverstellung der Lenksäule bekannt, so daß verschieden großen Fahrzeuglenkern eine optimale Einstellung und eine der Fahrsituation anzupassende Position des Lenkrades ermöglicht wird. Diese Klemmvorrichtungen verbessern sowohl den Komfort als auch die Sicherheit und stellen somit eine sinnvolle Einrichtung dar.
Nach dem Stand der Technik umfassen diese Klemmvorrichtungen eine ortsfest am Fahrzeug befestigte Konsole mit Tragarmen, zwischen denen die Lenksäule angeordnet ist. Zwischen bzw. an diesen Tragarmen ist die Klemmvorrichtung zur Lageverriegelung der Lenksäule vorgesehen, mit der diese durch Annäherung der Tragarme an die Lenksäule lagefixierbar und durch Entfernen einstellbar ist.

Die GB-A 21 13 164 beschreibt eine Klemmvorrichtung, bei der die Klemmelemente, und zwar ein Anschlagorgan bzw. eine Axialscheibe, an dem Zugbolzen angreifen. Ein Verriegelungselement ist dabei so angeordnet, daß dessen Betätigungsorgan bei einer Relativverdrehung zum Zugbolzen zwischen einer wirksamen Verriegelungslage und einer Entriegelungslage verschiebbar ist. Dabei ist das Betätigungsorgan einteilig mit einem Verstellhebel verbunden.

Eine Klemmvorrichtung gemäß den oberbegriffsbildenden Merkmalen von Anspruch 1 ist aus der FR-A 26 96 403 bekannt. Diese Klemmvorrichtung sieht eine am freien Ende des Zugbolzens befestigte Axialscheibe vor sowie eine Klemmscheibe vor, die lagefixiert auf dem aus einem Vierkantprofil hergestellten Zugbolzen positioniert sind. Die zwischen der Axialscheibe und der Klemmscheibe angeordneten weiteren Klemmmittel sind außen teilweise von einem Haltesegment umgeben, das nach der Montage der Klemmvorrichtung am Tragarm zu befestigen ist.

Den bekannten Klemmvorrichtungen gemeinsam ist eine weitestgehend offenliegende, ungeschützte Anordnung der Klemmmittel sowie eine aufwendige kostennachteilige Montage, da die gesamte Vorrichtung nicht vormontiert werden kann.

Es ist Aufgabe der Erfindung, eine Klemmvorrichtung zu schaffen, die, kompakt aufgebaut, eine geschützte Anordnung aller Klemmmittel vorsieht, die Funktion und den Bedienungskomfort verbessert sowie aufgrund ihrer konstruktiven Gestaltung eine Vormontage ermöglicht.

Die Erfindung löst diese Aufgabe durch die im Kennzeichnungsteil von Anspruch 1 genannten Merkmale. Danach umfaßt die Klemmvorrichtung ein topfartig gestaltetes Gehäuse, durch das der Zugbolzen hindurch geführt ist und in das alle Klemmmittel integriert sind. Damit besteht in vorteilhafter Weise die Möglichkeit einer Vormontierbarkeit der Klemmvorrichtung, die bei der anschließenden Fahrzeugmontage nur noch auf den Zugbolzen aufgesetzt werden muß. In einer Einbaulage ist das Gehäuse über einen Boden drehfixiert an dem einen Tragarm abgestützt, das auf der von diesem Tragarm abgewandten Ende mittels einer Axialscheibe verschlossen ist. Das bis auf eine Ausnehmung für den Handhebel, der zur Betätigung der Klemmvorrichtung dient, verschlossene Gehäuse stellt damit sicher, daß die Klemmmittel vor Verunreinigungen geschützt sind. Derartige Verunreinigungen würden zu Funktionsstörungen der Vorrichtung führen, wenn sie auf die Klemmrampe gelangen. Zur Verbesserung der Funktionssicherheit sowie des Bedienungskomforts ist weiterhin vorgesehen, die Klemmrampe der Klemmscheibe so auszubilden, daß sich die Klemmrampenkontur zwischen einer Nullstellung und einer Klemmstellung kontinuierlich ändert. Dadurch kann erreicht werden, daß die Verstellkraft über dem gesamten Verstellwinkel nahezu konstant ist. Vorzugsweise ist eine Klemmrampe vorgesehen, die im Bereich einer ersten Phase einen steilen Anstieg aufweist, so daß bereits eine gewisse Vorklemmung erfolgt. Bis zum Erreichen der endgültigen Klemmstellung soll sich an diese erste Phase ein flacher Anstieg anschließen. Diese Klemmkontur bewirkt, daß beim Lösen keine schlagartige Entspannung auftritt, wodurch der Handhebel der Klemmvorrichtung schlagartig in seine Endstellung bzw. Nullstellung verlagert würde, verbunden mit einer Verletzungsgefahr und einer starken nachteiligen Geräuschentwicklung. Der steile Anstieg begünstigt außerdem die Einstellung der Lenksäule in einer idealen Lenkradposition, da bereits nach einem kurzen Verschwenken des Handhebels eine ausreichende Klemmung der Lenksäule erreicht ist.

Eine bevorzugte Ausbildung der Erfindung sieht vor, die Haltescheibe, die zur Führung der Wälzkörper dient, auf einer Hülse drehfest anzuordnen, wobei die Hülse auf dem Zugbolzen verdrehbar geführt ist. Mit dieser Maßnahme ergibt sich eine verbesserte Führung des Handhebels, der mit der Haltescheibe verbunden ist. Die beidseitig axial über die Haltescheibe vorstehende Hülse vermeidet damit einen Axialschlag, d. h. eine Axialbeweglichkeit des Handhebels. Vorzugsweise erstreckt sich die Hülse dabei vom Boden des Gehäuses bis zur Axialscheibe.

Zur Vermeidung einer nachteiligen Biegebeanspruchung, die von der Klemmvorrichtung auf die Lenksäule übertragen würde, sieht die Erfindung eine mit zur Längsachse der Lenksäule parallele Anordnung der Klemmkörper in ihrer Klemmstellung vor. Danach sind die Lage der Klemmkörper in Bezug auf das Gehäuse so angeordnet, daß sie nach dem Verschwenken des Handhebels in die Klemmlage stets parallel zur Längsachse der Lenksäule ausgerichtet sind. Diese Lage unterbindet die Einleitung von nachteiligen Biegespannungen in die Klemmvorrichtung bzw. in die Tragarme und stellt damit eine definierte Klemmlage sicher.

In einer vorteilhaften Ausgestaltung der Klemmrampe ist vorgesehen, daß der Klemmrampenverlauf, von der Nullstellung ausgehend, zunächst einen steilen Anstieg aufweist, bis zu einem Wendepunkt, an den sich ein weiterer flacher, nahezu gleichbleibender Anstieg bis zu einem weiteren Wendepunkt anschließt, von dem aus die Kontur der Klemmrampe bis zur Klemmstellung zumindest leicht abfällt. Diese Klemmrampenkontur löst bereits bei einem geringen Verstellwinkel, d. h. Verschwenken des Handhebels, eine Vorspannung aus, mit der die Lenksäule gehalten ist. Damit stellt sich eine verbesserte Handhabung der Klemmvorrichtung ein, da zur Einstellung der optimalen Lenksäulenposition bereits nach einem begrenzten Schwenken des Handhebels die Lenksäule gehalten ist. Vorzugsweise ist der Handhebel so angeordnet, daß zur Überwindung des steilen Klemmrampenabschnitts der maximal größte Hebelarm verfügbar ist. Als besonders vorteilhaft hat sich eine Klemmrampenausbildung erwiesen, die zwischen der Nullstellung und der Klemmstellung der Wälzkörper ein Verstellwinkel von 33° ergibt. Als ein bevorzugtes Hubmaß ist dabei ein Maß von 0,7 mm vorgesehen.

In einer weiteren Ausgestaltung der Erfindung ist vorgesehen, die Klemmvorrichtung mit scheibenartig geformten Wälzkörpern zu versehen, die über eine Führungsachse in der Haltescheibe geführt sind. Diese Wälzkörpergestaltung wirkt sich positiv auf die Reibkraft der Klemmvorrichtung aus, wodurch sich die Betätigungskraft vorteilhaft reduziert. Die Wälzkörper stützen sich dabei an der Klemmrampe der Klemmscheibe sowie gegenüberliegend an einer Laufscheibe ab. Die Scheibenkontur bewirkt eindeutige Reibungsverhältnisse an der Kontaktfläche, da sich, bezogen auf die Drehachse zwischen der inneren und äußeren Randzone, nahezu gleiche Umfangsgeschwindigkeiten einstellen. Der erfindungsgemäße, scheibenartig geformte Wälzkörper begünstigt daher die Betätigungskraft und wirkt sich damit positiv auf den Bedienungskomfort sowie das Verschleißverhalten der erfindungsgemäßen Klemmvorrichtung aus.

Als unterstützende Maßnahme, mit der die Klemmvorrichtung in der Klemmstellung verharrt, ist weiterhin vorgesehen, eine als Drehfeder ausgebildete Klemmfeder einzusetzen. Die im Schließsinn der Klemmvorrichtung wirkende Klemmfeder ist dabei auf dem Zugbolzen geführt, und sie greift an der Laufscheibe und der Axialscheibe an. Neben der Vorspannung der Klemmvorrichtung in die Klemmstellung wirkt die Feder auch einem schlagartigen, unbeabsichtigten Lösen der Klemmvorrichtung entgegen.

In einer vorteilhaften Ausgestaltung der Erfindung ist vorgesehen, das Gehäuse spanlos durch ein Tiefziehverfahren aus einem Stahlblech herzustellen. Dieses auch für große Stückzahlen kostengünstige Herstellverfahren hat außerdem den Vorteil, daß ein gewichtsoptimiertes Gehäuse geschaffen werden kann. Zur Erreichung einer wirksamen Drehsicherung des Gehäuses am Tragarm ist das Gehäuse mit einem axial vorstehenden Ansatz versehen, der im eingebauten Zustand in eine entsprechend vorgesehene Ausnehmung des Tragarms eingreift.

Anhand von zwei Ausführungsbeispielen wird die Erfindung näher erläutert. Es zeigen:
- Figur 1: in einem Längsschnitt eine erfindungsgemäße Klemmvorrichtung;
- Figur 2: eine alternativ gestaltete, erfindungsgemäße Klemmvorrichtung, die im Unterschied zu Figur 1 mit einer Drehfeder versehen ist;
- Figur 3: eine Ansicht der Klemmvorrichtung, in welcher die Lage des Klemmhebels in einer Nullstellung und in einer Klemmstellung dargestellt sind;
- Figur 4: in einer vergrößerten Darstellung die Klemmrampe der Klemmscheibe, an der die Wälzkörper abgestützt sind.

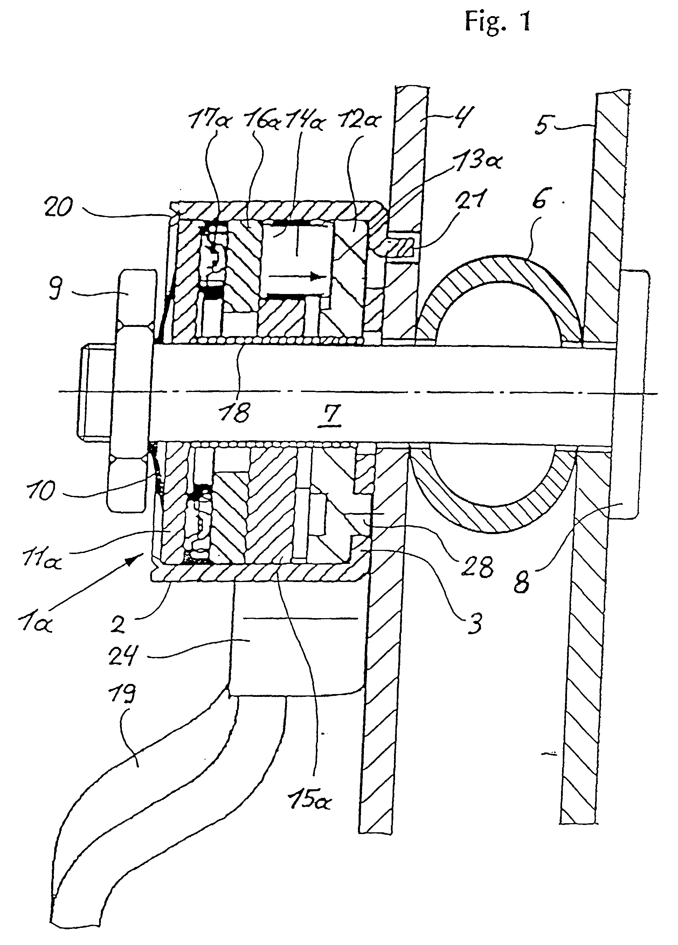

Eine in Figur 1 mit 1a bezeichnete Klemmvorrichtung umfaßt ein topfartig gestaltetes, aus Stahlblech spanlos geformtes Gehäuse 2, das alle Klemmittel umschließt. Das Gehäuse 2 ist über einen Boden 3 an einem Tragarm 4 abgestützt, der zusammen mit einem weiteren, parallel angeordneten Tragarm 5 als Konsole zur Halterung einer Lenksäule 6 dient. Zur Lagefixierung des Gehäuses 2 am Tragarm 4 ist zwischen diesen Bauteilen eine Drehsicherung 21 vorgesehen. Die Klemmvorrichtung 1a ist auf einem Zugbolzen 7 angeordnet, welcher, die Tragarme 4, 5 verbindend, gleichzeitig durch eine quer verlaufende Öffnung der Lenksäule 6 geführt ist. An einem Ende stützt sich der Zugbolzen 7 mittels eines Anschlages 8 am Tragarm 5 ab. Das weitere über die Klemmvorrichtung 1a vorstehende Ende des Zugbolzens 7 ist mit einem Gewinde versehen, auf dem eine Befestigungsmutter 9 angeordnet ist. An dieser liegt eine Tellerfeder 10 an, welche sich andererseits an einer Axialscheibe 11a abstützt, die das Gehäuse 2 stirnseitig verschließt. Alternativ kann die Tellerfeder 10 entfallen, wenn beispielsweise die federnde Eigenspannung der Tragarme 4, 5 in Längsrichtung des Zugbolzens 7 beim Lösen der Klemmvorrichtung ausreicht das Spreizmaß aufzuheben, um so eine Verstellung der Lenksäule 6 zu ermöglichen. Zur Schaffung einer Stellwegbegrenzung für die Axialscheibe 11a ist am Ende des Gehäuses 2 eine nach innen weisende Arretierung 20 vorgesehen.

Als Klemmmittel der Klemmvorrichtung 1a dient eine Klemmscheibe 12a, die mit Klemmrampen 13a versehen ist und an der sich Wälzkörper 14a abstützen. Zwischen der Klemmscheibe 12a und dem Boden 3 ist eine Verdrehsicherung 28 vorgesehen. Die umfangsverteilt angeordneten, in eine Haltescheibe 15a eingesetzten Wälzkörper 14a sind einerseits von der Klemmscheibe 12a und andererseits an einer Laufscheibe 16a abgestützt. Weiterhin umfaßt die Klemmvorrichtung 1a ein Axiallager 17a, das zwischen der Laufscheibe 16a und der Axialscheibe 11 a angeordnet ist. Die drehbar auf dem Zugbolzen 7 angeordnete Haltescheibe 15a ist zur Erreichung einer exakten Führung bzw. Vermeidung einer gegenüber der Längsachse des Zugbolzens 7 auftretenden Winkelbewegung einteilig mit einer Hülse 18 versehen, die mit geringem Spiel auf den Zugbolzen 7 aufgesetzt ist und deren Axialerstreckung sich vom Boden 3 bis zur Axialscheibe 11 erstreckt.

### Wirkungsweise der Klemmvorrichtung:

Die Klemmvorrichtung 1a dient dazu, die zwischen den Tragarmen 4 und 5 angeordnete Lenksäule 6 sowohl in der Neigung als auch in der Länge stufenlos verstellen zu können. Die Verstellung wird möglich durch ein Verdrehen der Haltescheibe 15a. Dazu dient ein Handhebel 19, der durch eine radiale Öffnung im Gehäuse 2 geführt und einteilig mit der Haltescheibe 15a verbunden ist. Zur Begrenzung des Schwenkbereichs des Handhebels 19 ist eine Gehäusewandung 24 vorgesehen. In Figur 1 ist die Lenksäule 6 in der Klemmstellung abgebildet. Zum Lösen der Lenksäule 6 ist eine Verdrehung der Haltescheibe 15a erforderlich, die eine axiale Verlagerung der Wälzkörper 14a in Pfeilrichtung an der Klemmrampe 13a hervorruft. Synchron zur Verschiebung der Wälzkörper 14a verlagern sich die kraftschlüssig an den Wälzkörpern 14a anliegenden Bauteile wie Laufscheibe 16a, Axiallager 17a sowie die Axialscheibe 11a, unterstützt durch die Federkraft der Tellerfeder 10. Aufgrund des sich verändernden, d. h. reduzierenden Spreizmaßes verringert sich die von der Tellerfeder 10 ausgeübte Vorspannung auf die Klemmmittel der Klemmvorrichtung 1a, wodurch sich die unter Vorspannung eingesetzten Tragarme 4, 5 voneinander axial entfernen und sich dadurch eine Lösestellung der Lenksäule 6 einstellt. Zur Klemmung der Lenksäule 6 ist es erforderlich, mittels des Handhebels 19 die Haltescheibe 15 im entgegengesetzten Drehsinn zu verdrehen, so daß ein maximales Spreizmaß der Klemmmittel erreicht wird.

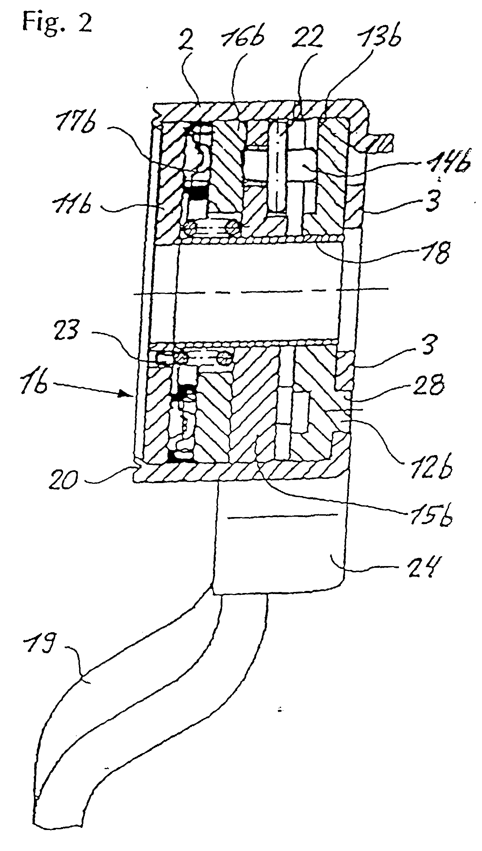

Für ein zweites Ausführungsbeispiel (Figur 2) einer erfindungsgemäßen Klemmvorrichtung 1b wurden die Bezugsziffern gemäß Figur 1 vollständig übernommen. Die in Figur 1 mit dem Index "a" versehenen Bezugsziffern bezeichnen Unterschiedsteile, die in Figur 2 mit dem Index "b" versehen sind. Die Funktion der Klemmvorrichtung 1b stimmt überein mit der in Figur 1 abgebildeten Klemmvorrichtung 1a, so daß bezüglich deren Beschreibung auf die Erläuterungen zum ersten Ausführungsbeispiel verwiesen werden kann.

Gemäß Figur 2 umfaßt die Klemmvorrichtung 1b scheibenartig gestaltete Wälzkörper 14b, die über eine Achse 22 in der Haltescheibe 15b geführt sind. Die Scheibenkontur führt zu einer reduzierten Kontaktfläche der Wälzkörper 14b an der Klemmrampe 13b der Klemmscheibe 12b sowie an der Laufscheibe 16b. Weiterhin verfügt die Klemmvorrichtung 1b über eine Drehfeder 23, die zwischen der Axialscheibe 11 b und der Haltescheibe 15b angeordnet und auf dem Zugbolzen 7 geführt ist. Dabei ist die Drehfeder 23 so gestaltet und angeordnet, das diese eine im Schließsinn der Klemmvorrichtung 1b ausübende Kraftkomponente hervorruft, so daß ein schlagartiges Lösen der Klemmvorrichtung 1b vermieden werden kann.

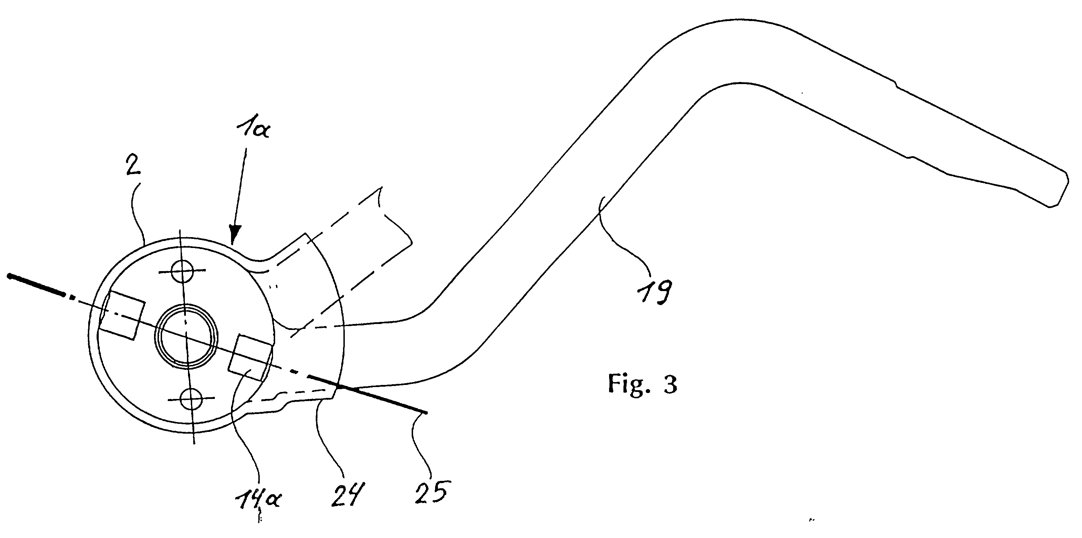

In der Figur 3 ist die Klemmvorrichtung 1a in einer Ansicht abgebildet, aus der insbesondere die Lage der Klemmkörper 14a in der Klemmstellung zu der Lenksäule 6 entnehmbar ist. Danach nehmen die zwei gegenüberliegend angeordneten Wälzkörper 14a in der Klemmstellung eine Lage ein, die weitestgehend parallel zur Längsachse 25 der Lenksäule 6 verläuft. Die Lageübereinstimmung vermeidet eine nachteilige Biegebeanspruchung der Klemmvorrichtung 1a, die sich einstellen würde, wenn in einer Klemmstellung die Längsachse 25 mit einem Winkel zu der Längsachse der Wälzkörper 15a verlaufen würde, was zu nicht eindeutigen Klemmverhältnissen führen könnte. Weiterhin ist aus der Figur 3 die Ausbildung des Handhebels 19 entnehmbar, der an der Gehäusewandung 24 der Nullstellung bzw. Klemmstellung entsprechend einen Endanschlag erfährt. Eine gestrichelte Darstellung zeigt die Lage des Handhebels 19 in einer gelösten Stellung der Klemmvorrichtung 1a.

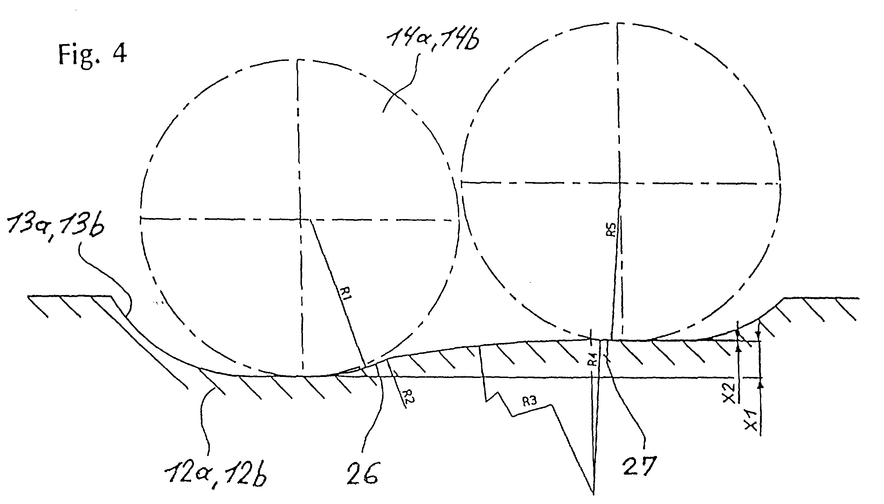

Die erfindungsgemäße Gestaltung der Klemmrampen verdeutlichend zeigt die Figur 4 in einem vergrößerten Maßstab den Verlauf der Klemmrampe 13a, 13b und einen darauf angeordneten Wälzkörper 14a, 14b in zwei Stellungen. Ausgehend von der Nullstellung weist die Kontur der Klemmrampen 13a, 13b zunächst einen kurzen steilen Anstieg auf, der bemaßt ist mit dem Radius "R1" und bis zu einem Wendepunkt 26 reicht. An den Wendepunkt 26 schließt sich ein Radius "R2" an, der flacher bis zu einem Übergang zu einem Radius "R3" verläuft. An diese Rampenkontur schließt sich ein Radius "R4" an. Der Radius "R4" geht im Wendepunkt 27 über in einen Radius "R5", der einen abfallenden Konturverlauf aufweist und damit einen Höhenversatz "X2" zu dem Wendepunkt 27 im Bereich der Klemmstellung sicherstellt. Damit ergibt sich für die Wälzkörper 14a, 14b eine Übertotpunktfunktion ein, bei der diese in einer muldenartigen Vertiefung in der Klemmstellung gehalten werden. Über die gesamte Länge der Klemmrampe 13a, 13b die dem maximalen Verstellwinkel entspricht, ergibt sich dabei ein Hub "X1" für die Wälzkörper 14a, 14b, der zu einem entsprechenden Spreizmaß der Klemmvorrichtung führt.

## Patentansprüche

1. Klemmvorrichtung zur Lagefixierung einer in ihrer Länge- und/oder Neigung verstellbaren Fahrzeuglenksäule, die in Tragarmen (4, 5) einer ortsfesten Konsole geführt ist und einen Zugbolzen (7) umfaßt, der rechtwinklig zu der Lenksäule (6) angeordnet ist und sich zwischen beiden Tragarmen (4, 5) erstreckt, wobei ein Ende des Zugbolzens (7) an dem einen Tragarm (5) gehalten ist und wobei an seinem gegenüberliegenden axial über den anderen Tragarm (4) vorstehenden Ende zwischen einer Axialscheibe (11) und dem Tragarm (4) auf dem Zugbolzen eine mit Klemmrampen (13a, 13b) versehene Klemmscheibe (12a, 12b) angeordnet ist, an der Wälzkörper (14a, 14b) abgestützt sind, die in einer drehbar auf dem Zugbolzen (7) angeordneten Haltescheibe (15a, 15b) geführt sind, welche mittels eines manuell betätigbaren Handhebels (19) verdrehbar ist, wobei sich abhängig von einer Drehrichtung der Haltescheibe (15a, 15b) die Tragarme (4, 5) zur Klemmung der Lenksäule annähern und zum Lösen von der Lenksäule entfernen, wobei die Klemmscheibe (12a, 12b) Klemmrampen (13a, 13b) mit einer Kontur aufweist, die sich von einer Nullstellung zu einer Klemmstellung kontinuierlich verändert, dadurch gekennzeichnet, daß die Klemmvorrichtung (1a, 1b) ein topfartig gestaltetes Gehäuse (2) aufweist, das in einer Einbaulage mit einem Boden (3) drehfixiert am Tragarm (4) anliegt, und daß das Gehäuse (2), durch das der Zugbolzen (7) geführt ist, alle Klemmmittel umschließt und von einer Axialscheibe (11a, 11b) verschlossen ist.

2. Klemmvorrichtung nach Anspruch 1, **dadurch gekennzeichnet,** daß die Haltescheibe (15a, 15b) über eine Hülse (18), die axial beidseitig über die Haltescheibe (15a, 15b) vorsteht, auf dem Zugbolzen (7) verdrehbar geführt ist.

3. Klemmvorrichtung nach Anspruch 2, **dadurch gekennzeichnet,** daß sich die Hülse (18) vom Boden (3) bis zur Axialscheibe (11a, 11b) erstreckt.

4. Klemmvorrichtung nach Anspruch 1, **gekennzeichnet durch** eine Anordnung der Wälzkörper (14a, 14b) in ihrer Klemmstellung, die parallel zur Längsachse (25) der Lenksäule (6) verläuft.

5. Klemmvorrichtung nach Anspruch 1, **dadurch gekennzeichnet,** daß die Klemmrampe (13a, 13b) der Klemmscheibe (12a, 12b), von einer Nullstellung ausgehend, zunächst einen steilen bis zu einem Wendepunkt (26) verlaufenden Anstieg aufweist, an den sich ein flacher werdender Anstieg anschließt, der bis zu einem Wendepunkt (27) reicht, von dem aus die Kontur der Klemmrampe (13a, 13b) bis zur Klemmstellung abfällt, wobei die Klemmrampe (13a, 13b) zur Lagesicherung des Wälzkörpers (14a, 14b) in der Klemmstellung einen Höhenversatz X2 gegenüber dem Wendepunkt (27) aufweist.

6. Klemmvorrichtung nach Anspruch 1, **gekennzeichnet durch** scheibenartig geformte Wälzkörper (14b), die über eine Achse (22) in die Haltescheibe (15b) geführt sind.

7. Klemmvorrichtung nach Anspruch 1, **gekennzeichnet durch** eine Drehfeder (23), die zwischen der Axialscheibe (11b) und einer Laufscheibe (16b) angeordnet und auf dem Zugbolzen (7) geführt ist.

8. Klemmvorrichtung nach Anspruch 7, dadurch gekennzeichnet, daß die Drehfeder (23) im Schließsinn der Klemmvorrichtung (1b) wirkt.

9. Klemmvorrichtung nach Anspruch 1, gekennzeichnet durch ein aus Stahlblech durch ein Tiefziehverfahren spanlos geformtes Gehäuse (2).

10. Klemmvorrichtung nach Anspruch 1, dadurch gekennzeichnet, daß das Gehäuse (2) zur Schaffung einer Drehsicherung (21) einen axialen Ansatz aufweist, der in eine entsprechende Ausnehmung des Tragarms (4) eingreift.

## Claims

1. A clamping device for locking the position of a steering column of a motor vehicle in its adjustable length and/or inclination, which is guided in bearing arms (4, 5) of a permanently fixed bracket and has a tension bolt (7) which is arranged perpendicular to the steering column (6) and extends between the two bearing arms (4, 5), one end of the tension bolt (7) being retained on the one bearing arm (5) and the oppositely lying end thereof, projecting axially out beyond the other bearing arm (4), having, between a thrust washer (11) and the bearing arm (4) on the tension bolt, a clamping plate (12a, 12b) with clamping ramps (13a, 13b), against which roller members (14a, 14b) are supported, guided in a retaining plate (15a, 15) arranged on the tension bolt (7) so as to twist, and which is twisted by means of a manually operable lever (19), causing the bearing arms (4, 5) to move closer together in order to clamp the steering column and farther apart in order to release the steering column, regardless of the direction of rotation of the retaining plate (15a, 15b), the clamping plate (12a, 12b) having clamping ramps (13a, 13b) with a contour which changes continuously from a zero position to a clamping position, characterised in that the clamping device (1a, 1b) has a housing (2) of a pot-type design which, in an assembled position, lies so that it is fixed by means of a floor (3), preventing rotation, on the arm (4) and in that the housing (2), by means of which the tension bolt (7) is guided, encloses all clamping means and is closed off by a thrust washer (11a, 11b).

2. A clamping device as claimed in claim 1, characterised in that the retaining plate (15a, 15b) is rotatably guided on the tension bolt (7) by means of a sleeve (18) which projects axially at both ends out beyond the retaining plate (15a, 15b).

3. A clamping device as claimed in claim 2, characterised in that the sleeve (18) extends from the floor (3) to the thrust washer (11a, 11b).

4. A clamping device as claimed in claim 1, characterised by an arrangement whereby the roller elements (14a, 14b) run parallel with the longitudinal axis (25) of the steering column (6) in their clamping position.

5. A clamping device as claimed in claim 1, characterised in that, starting from a zero position, the clamping ramp (13a, 13b) of the clamping plate (12a, 12b) initially has a steep rise running to a turning point (26), adjoining which is an increasingly flatter rise running as far as a turning point (27), from which onwards the contour of the clamping ramp (13a, 13b) decreases until reaching the clamping position, the clamping ramp (13a, 13b) having a height offset X2 relative to the turning point (27) in order to lock the roller elements (14a, 15b) in position in the clamping position.

6. A clamping device as claimed in claim 1, characterised by formed roller elements (14b) of a disc-type, which are guided in the retaining plate (15b) by means of a shaft (22).

7. A clamping device as claimed in claim 1, characterised by a torsion spring (23) which is arranged between the thrust washer (11b) and a runner plate (16b) and guided on the tension bolt (7).

8. A clamping device as claimed in claim 7, characterised in that the torsion spring (23) acts in the closing direction of the clamping device (1b).

9. A clamping device as claimed in claim 1, characterised by a housing (2) formed from sheet steel, without cutting, by means of a deep-drawing process.

10. A clamping device as claimed in claim 1, characterised in that in order to prevent it from rotating, the housing (2) has an axial shoulder acting as an anti-rotation lock (21) which engages in a matching recess of the bearing arm (4).

## Revendications

1. Dispositif de blocage destiné à bloquer la position d'une colonne de direction dont il est possible de varier la longueur et l'inclinaison, qui est guidée dans des bras de support (4, 5) d'une console fixe et comprend un boulon d'assemblage (7), qui est perpendiculaire à la colonne de direction (6) et s'étend entre les deux bras de support (4, 5), une extrémité du boulon d'assemblage (7) étant retenue contre l'un des bras de support (5) et un disque de blocage (12a, 12b) muni de pentes de blocage (13a, 13b) étant disposé entre un disque axial (11) et le bras de support (4) sur le boulon d'assemblage au niveau de son extrémité opposée dans le sens axial et en saillie au-dessus de l'autre bras de support (4), contre lequel disque de blocage viennent en appui des corps de roulement (14a, 14b), qui sont guidés dans un disque de support (15a, 15b) disposé sur le boulon d'assemblage (7) de manière à pouvoir tourner, lesquels peuvent tourner, à l'aide d'un levier (19) actionné à la main, les bras de support (4, 5) en fonction du sens de rotation du disque de support (15a, 15b), se rapprochant pour bloquer la colonne de direction et s'écartant pour desserrer la colonne de direction, le disque de blocage (12a, 12b) étant muni de pentes de blocage (13a, 13b) avec un contour qui varie en continu d'une position zéro vers une position de blocage, caractérisé en ce que le dispositif de blocage (1a, 1b) est muni d'un boîtier (2) en forme de cuve, dont un fond (3), en position de montage, est en appui contre le bras de support (4) de manière à ne pas pouvoir tourner et en ce que le boîtier (2) à travers lequel passe le boulon d'assemblage (7) entoure tous les organes de blocage et est fermé par un disque axial (11a, 11b).

2. Dispositif de blocage selon la revendication 1, caractérisé en ce que le disque de support (15a, 15b) est réalisé de manière à pouvoir tourner sur le boulon d'assemblage (7) par l'intermédiaire d'une gaine (18) qui s'avance au-delà du disque de support (15a, 15b) dans le sens axial de part et d'autre de celui-ci.

3. Dispositif de blocage selon la revendication 2, caractérisé en ce que la gaine (18) s'étend du fond (3) jusqu'au disque axial (11a, 11b).

4. Dispositif de blocage selon la revendication 1, caractérisé par une disposition des corps de roulement (14a, 14b) dans une position de blocage, qui s'étend parallèlement à l'axe longitudinal (25) de la colonne de direction (6).

5. Dispositif de blocage selon la revendication 1, caractérisé en ce que la pente de blocage (13a, 13b) du disque de blocage (12a, 12b) suit, à partir d'une position zéro, d'abord une forte pente ascendante jusqu'à un point d'inflexion (26) qui est prolongé par une pente ascendante progressivement plane qui s'étend jusqu'à un point d'inflexion (27) à partir duquel le contour de la pente de blocage (13a, 13b) suit une pente descendante jusqu'à la position de blocage, la pente de blocage (13a, 13b) présentant dans la position de blocage un décalage de hauteur X2 par rapport au point d'inflexion (27) pour bloquer la position des corps de roulement (14a, 14b).

6. Dispositif de blocage selon la revendication 1, caractérisé par des corps de roulement en forme de disques (14b), qui sont guidés par un axe (22) dans le disque de support (15b).

7. Dispositif de blocage selon la revendication 1, caractérisé par un ressort de torsion (23), qui est disposé entre le disque axial (11b) et un disque de roulement (16b) et est orienté vers le boulon d'assemblage (7).

8. Dispositif de blocage selon la revendication 7, caractérisé en ce que le ressort de torsion (23) agit dans le sens de fermeture du dispositif de blocage (1b).

9. Dispositif de blocage selon la revendication 1, caractérisé par un boîtier (2) en tôle d'acier obtenu par formage dans un procédé d'emboutissage.

10. Dispositif de blocage selon la revendication 1, caractérisé en ce que le boîtier (2), pour former un système de blocage de rotation (21), est muni d'une saillie axiale qui entre en prise dans un évidement correspondant du bras de support (4).
